# EUROPÄISCHE PATENTANMELDUNG

(11) **EP 1 813 419 A1**
(43) Veröffentlichungstag der Anmeldung: **01.08.2007**
(21) Anmeldenummer: 05747264.9
(22) Anmeldetag: 27.04.2005
(51) Int. Cl.: B32B 7/00, H01B 3/18

(54) **ELEKTROISOLIERMATERIAL**

(30) Priorität: 26.10.2004 RU 2004131060
(71) Anmelder: Tsoy, Bronya, Moscow, 117342 (RU)
(72) Erfinder: TSOI, Bronya, Moscow, 117342 (RU); LAVRENTIEV, Vladimir Vladimirovich, Krasnodarsky krai, 35390 (RU); KARTASHOV, Eduard Mikhailovich, Moscow, 123242 (RU); SHEVELEV, Valentin Vladimirovich, Moscow, 117321 (RU)
(74) Vertreter: Kaiser, Magnus
(86) Internationale Anmeldenummer: PCT/RU2005/000227
(87) Internationale Veröffentlichungsnummer: WO 2006/046883

(57) **Zusammenfassung**

Die Erfindung bezieht sich auf die Elektrotechnik und betrifft insbesondere elektrische Isolierstoffe, die sich wirksam als Isolatoren für elektrische Leiter einsetzen lassen, die in verschiedenen Industriezweigen, insbesondere in der funktechnischen Industrie, der Kabelindustrie, der Mikroelektronik usw. Anwendung finden.

Erfindungsgemäss sind bei einem elektrischen Isolierstoff mit einer Mehrschichtenstruktur, bestehend aus Dünnfolienschichten in einer Menge von N, wobei N > 1 ist, alle Schichten aus gleichtypigen, zu einem Stapel zusammengefassten Einzelfolien mit im wesentlichen gleicher Dicke d < 80 µm ausgebildet. Der hergestellte Werkstoff kennzeichnet sich durch eine einfachere Fertigungstechnik bei im wesentlichen minderen Kosten für die verwendeten Werkstoffe gegenüber dem Stand der Technik und gleichzeitig durch beachtlich höhere Werte der dielektrischen und mechanischen Festigkeit.

## Beschreibung

### Technisches Gebiet

Die vorliegende Erfindung bezieht sich auf die Elektrotechnik und betrifft insbesondere elektrische Isolierstoffe.

### Stand der Technik

Zur Zeit ist eine breite Palette von elektrischen Isolierstoffen bekannt, die sich nach ihrer physikalischen Struktur und chemischen Zusammensetzung voneinander unterscheiden.

Bekannt ist z. B. die Verwendung von einschichtigen massiven Blöcken, Platten oder Folien aus herkömmlichen Kunststoffen mit dielektrischen Eigenschaften, wie z. B. Polyimide, Fluorkunststoffe, Polyethylen, Polystirol, Polyethylentereftalat od. dgl., als elektrische Isolierstoffe (siehe z. B. "Nachschlagebuch für elektrotechnische Werkstoffe", herausgegeben von Ju.W. Korizki et al., Moskau, Verl. "Energia", 1974, Bd. 1, S. 584). Anwendungsfall eines konkreten Kunststoffes richtet sich nach den Betriebsbedingungen eines Isolierstoffes sowie nach der Einflussnahme einer äusseren Belastung oder eines aggressiven Mediums. Die Nachteile der bekannten einschichtigen Block- und Folienpolymere bestehen in verhältnismässig niedrigen Festigkeitswerten. Die elektrische Durchschlagsspannung dieser Isolierstoffe beläuft sich auf 0,15 bis 0,30 kV/µm und die mechanische Reissfestigkeit auf 20 bis 400 MPa.

Weit bekannt sind auch elektrische Isolierverbundstoffe auf Grundlage verschiedener Hartgewebe (am meisten von Glasfasergeweben), Verbundstoffe auf Grundlage verschiedener Fasern (Glas-, Basaltfasern od. dgl.) und füllstoffhaltiger Polymere.

So beschreibt z. B. das Patent RU 2111568 C1, H01B 3/00, Tanenbaum et al., bekanntgemacht am 20.05.1998, einen einschichtigen elektrischen Isolierstoff, enthaltend ein thermoplastisches Copolymer, eine Russkohle als stromleitenden Füllstoff und Seignettedielektrikum und Bariumtitanat als anorganischen Füllstoff, wobei der genannte polymere Verbundstoff durch ionisierende Bestrahlung vernetzt werden kann.

Im Patent RU 2029998 C1, H01B 3/00, Forschungsinstitut ELPA, bekanntgemacht am 27.02.1995, handelt es sich um einen einschichtigen elektrischen Isolierstoff in Form eines Bandes, welches durch eine Leinwandbindung von komplexen gedrehten Glasfäden ausgebildet ist, wobei die Kettfäden mit synthetischen Hochmodulfäden kombiniert sind und die synthetischen und die Glasfäden bei einem bestimmten Verhältnis derer Liniendichte eingesetzt werden.

Im Patent RU 2032949 C1, H01B 3/48, Kibol et al., bekanntgemacht am 10.04.1995, ist ein einschichtiger elastischer elektrischer Isolierstoff mit einer erhöhten Elastizität, dielektrischen und mechanischen Festigkeit auf Grundlage eines mit einem Epoxidbinder gesättigten Gewebes beschrieben, welches aus gedrehten Basaltfäden mit je einem Durchmesser von unter 9 µm, einer Liniendichte von 100 bis 250 Täcks x 1 x 2 in der Kette und von 100 bis 250 Täcks x 1 x 4 im Schuss bei einer mehrschichtigen Bindung mit einer Dicke zwischen 1 und 3 mm hergestellt ist.

Im Patent RU 2043446 C1, H01B 3/52, wissenschaftliche Produktions- und Aktiengesellschaft geschlossenen Typs "Syntex", bekanntgemacht am 10.09.1995, handelt es sich um einen mehrschichtigen elektrischen Isolierstoff, der aus einer oder zwei Schichten eines elektrischen Isolierpapieres auf Grundlage von Polyaramidfibriden und einem Gemisch aus Polyätherfasern mit unterschiedlicher Liniendichte sowie aus einer Schicht einer Polyätherfolie, die mittels eines Binders mit einer Schicht oder Schichten des elektrischen Isolierpapiers verbunden ist, besteht. Es wird dabei als Binder ein Gemisch aus einem Polyäther- und einem Epoxidharz bei einem Verhältnis von 1 : 5 bis 5 : 1 ggf. bei einem Zusatz an einem Härter vorgeschlagen.

Die vorstehend beschriebenen elektrischen Isolierstoffe sind bei Anwendung komplizierter Verfahrensschritte hersgestellbar, wobei jedoch deren dielektrische und mechanische Festigkeit nur noch unwesentlich die ähnlichen Werte der vorerwähnten einschichtigen Isolierstoffe auf Grundlage herkömmlicher Polymere übertreffen.

Am nächsten liegt dem beanspruchten elektrischen Isolierstoff derselbe aus der US-PS 5300364, B32B 15/08, Hase et al., bekanntgemacht am 05.04.1994, mit einer mehrschichtigen Struktur aus Dünnfolienschichten in einer Menge von N, wobei N > 1 ist. Hierbei weisen bei dem bekannten elektrischen Isolierstoff alle Schichten unterschiedliche Dicken auf, die einem bestimmten Verhältnis genügen sollen, welchem auch thermische Ausdehnungskoeffizienten einer jeden Schicht zugeordnet sind.

Der bekannte Isolierstoff wie auch der eingangs beschriebene Isolierstoff zeichnen sich durch eine ziemlich komplizierte Fertigungstechnik aus, was durch eine notwendige Auswahl von Schichten bedingt ist, von welchen jede Schicht strikt individuelle, von restlichen Schichten abweichende Eigenschaften besitzt. Es gelingt dabei jedoch nicht, einen nennenswerten Anstieg an dielektrischer und mechanischer Festigkeit in bekanntem Isolierstoff gegenüber anderen bekannten Isolierstoffen (auf Grundlage herkömmlicher Polymere und Verbundstoffe) zu erreichen.

### Darstellung der Erfindung

Aufgabe der vorliegenden Erfindung ist es, einen neuen elektrischen Isolierstoff bereitzustellen, der durch eine einfachere Fertigungstechnik bei im wesentlichen minderen Kosten der eingesetzten Werkstoffe gegenüber dem Stand der Technik und gleichzeitig durch nennenswert höhere Werte der dielektrischen und mechanischen Festigkeit gekennzeichnet ist.

Diese Aufgabe wird dadurch gelöst, dass bei einem elektrischen Isolierstoff mit einer mehrschichtigen Struktur, welche aus Dünnfolien-Schichten in einer Menge von N besteht, wobei N > 1 ist, erfindungsgemäss alle Schichten durch gleichtypige, zu einem Stapel zusammengefasste Einzelfolien mit einer im wesentlichen gleichen Dicke ausgebildet sind.

Unter einem Stapel soll im Rahmen der vorliegenden Erfindung eine mehrschichtige Struktur verstanden werden, welche eine untere und eine obere Schicht sowie bei N > 2 Zwischenschichten aufweist, von denen jede Schicht durch ein beliebiges bekanntes Verfahren auf die nächstliegende untere Schicht aufgebracht wird. Unter gleichtypigen Folien sind solche zu verstehen, die aus ein und demselben Werkstoff mit Hilfe eines gleichen Verfahrens hergestellt sind. Ein Idealfall, bei welchem sämtliche Folien, die aus einem gleichen Werkstoff mittels eines gleichen Verfahrens gefertigt sind, nach ihren Grössen und ihrem physikalischen Verhalten absolut identisch sind, ist im Rahmen der Erfindung wünschenswert, er ist jedoch in der Praxis schwer erreichbar, so dass daher Folien als gleichtypig und als im wesentlichen gleich stark bezeichnet werden. Durch den Ausdruck "Einzelfolien", aus denen ein Stapel gebildet ist, wird gemeint, dass irgendwelche (physikalische oder chemische) Zusammenhänge zwischen zwei benachbarten Folien ausbleiben.

Diese Erfindung beruht auf einem durch die Erfinder überraschend festgestellten Effekt eines starken und extrem starken Anstieges der den festen Körpern und Polymeren eigenen physikalischen Eigenschaften in einer mehrschichtigen Struktur, die aus gleichtypigen, zu einem Stapel zusammengefassten Einzelfolien mit im wesentlichen gleicher Dicke d < 80 µm besteht. Bei der Anordnung von nach der chemischen Zusammensetzung gleichtypigen Einzelschichten mit im wesentlichen gleicher Dicke von unter 80 µm und dielektrischen Eigenschaften zu einem Stapel erhöhen sich die Werte einer elektrischen Durchschlagsspannung und solche einer mechanischen Festigkeit eines hergestellten mehrschichtigen Werkstoffes um mehrere Zehnerpotenzen gegenüber den bekannten Werkstoffen. Dabei spielt die Folienkonfiguration gar keine Rolle.

### Beste Ausführungsform der Erfindung

Der Erfindungskern und die Erreichbarkeit des beanspruchten technischen Ergebnisses werden nachstehend an konkreten Ausführungsbeispielen der Erfindung unter Bezugnahme auf eine beigelegte Zeichnung, auf der Diagramme der Abhängigkeit der Lebensdauer von einer konstanten Zerreißspannung für eine einschichtige Folie und Mehrelementenfolien (einen Stapel) aus Polymethylmethakrylat (PMMA) bei einer Testtemperatur von 293 K gezeigt sind, näher erläutert.

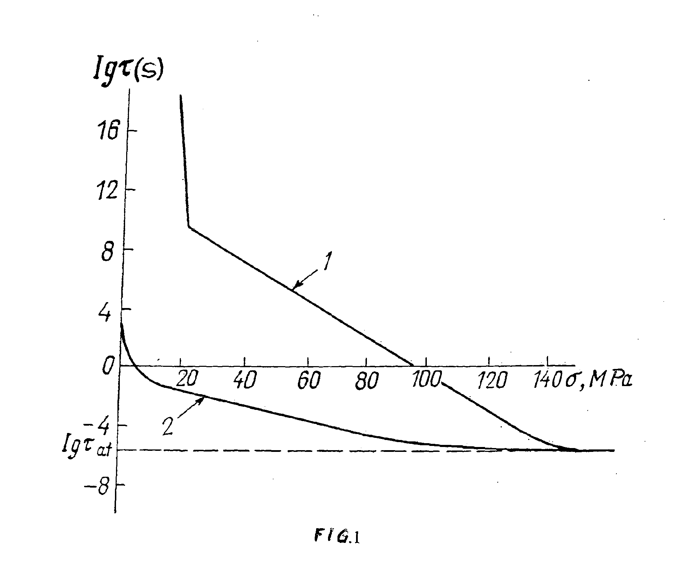

Fig. 1 zeigt Vergleichsangaben zur Lebensdauer von Folien aus Polymethylmethacrylat (PMMA). Der Verlauf 1 veranschaulicht die Lebensdauer einer PMMA-Mehrelementenfolie (eines Stapels) mit einer summarischen Dicke von 90 µm, die durch gleichtypige PMMA-Einzelfolien gleicher Dicke (d₀ = 9 µm) bei N = 10 gebildet ist, und der Verlauf 2 zeigt die Lebensdauer einer PMMA-Einelementenfolie mit einer Dicke d₀ = 90 µm. Aus diesen Angaben geht hervor, dass die PMMA-Mehrelementenfolie (der Stapel) eine viel höhere Lebensdauer aufweist. Gemäss der Fig. 1 beläuft sich die Zeit eines garantierten Arbeitsvermögens (einer garantierten Lebensdauer) von Monofolien (bei einer Belastung von 60 MPa) auf 10⁻⁴ s, während die Lebensdauer eines Stapels mit einer ähnlichen Gesamtdicke bei einer Belastung von 60 MPa 10⁴ s ausmacht, d. h. dass sie um 10⁸ s höher ist.

Ähnlich sind auch die Ergebnisse für die elektrische Lebensdauer beliebiger Folien, d. h. für die Zeit von dem Beginn einer elektrischen Belastung bis auf eine elektrische Durchschlagsspannung.

In Tabelle 1 sind Angaben zur Einflussnahme der Anzahl von Folien als Elemente in einer Mehrelementenstruktur (einem Stapel) auf die Zerreißspannung der Folien aus Polyethylenterephtalat (PET) zusammengefasst. Der Wert der Zerreißspannung einer jeden Probe wurde als Mittelwert von 10 Messungen bei einer Belastungsgeschwindigkeit einer Zerreissmaschine W = 2,9 MPa/s berechnet. Aus der Tabelle 1 ist ersichtlich, dass insbesondere die Zerreißspannung einer massiven Monofolie mit einer Dicke von 145 µm 100 MPa beträgt, während sie für einen Stapel mit 8 dünnen Monofolien bei nahezu gleicher summarischen Dicke von 144 µm 700 MPa ausmacht, d. h. 7 mal so hoch ist. Die in Tabelle 1 aufgeführten Angaben sprechen auch dafür, dass in Einelementen- und Mehrelementenstrukturen bei einer Schichtdicke von über 80 µm kein Effekt eines Anstieges der Zerreißspannung zu verzeichnen ist.

Vergleichsmässige Verläufe und Erzielung eines bedeutenden Anstieges der dielektrischen Festigkeit bei Proben von PET-Folien sind in Tabelle 2 veranschaulicht. Der Wert der dielektrischen Festigkeit *E̅* wurde für jede Probe als Mittelwert aus zehn Messungen ermittelt. Wie aus der Tabelle 2 hervorgeht, beläuft sich die dielektrische Festigkeit einer Monofolie mit 80 µm Dicke auf 0,26 kV/µm und dieselbe einer Isolation, bestehend aus acht 10 µm dicken Folien mit einer Gesamtdicke von 80 µm auf 1,6 kV/µm, d. h. 6 mal so hoch. Aus der Tabelle 2 ist auch ersichtlich, dass bei einer Prüfung einer Einelementen- oder Mehrelementenstruktur mit einer Schichtdicke, die über den Rahmen der erfindungsgemässen Begrenzung (80 µm) hinausgeht, kein Anstieg der dielektrischen Festigkeit feststellbar ist.

Um eine wesentliche Verbesserung der physikalischen Eigenschaften eines Stapels zu erlangen, kommt der Folienkonfiguration gar keine Bedeutung zu. Einen wesentlichen Einfluss auf das Ergebnis üben nur noch die Folienzahl in einem Stapel und die Foliendicke aus, d. h. je grösser die Folienzahl in einem Stapel und je weniger die Dicke einer Folie ist, desto höher sind die physikalischen Werte einer finalen Mehrschichtenstruktur. Diese Gesetzmässigkeit lässt sich anhand der Werte aus der Tabelle 2 gut beobachten.

Ein elektrischer Isolierstoff gemäss der Erfindung kann insbesondere folgenderweise hergestellt und eingesetzt werden.

Es wird eine vorbestimmte Anzahl von gleichtypigen Einzelfolien (z. B. aus einem Polymer, insbesondere aus Fluor-, Polystyrolkunstoffen od. dgl. oder Folien aus Quarz, Glimmer und generell aus einem dielektrischen Folienmaterial) mit im wesentlichen gleicher Dicke d₀ < 80 µm ausgewählt. Die Foliendicke richtet sich nach den gewünschten Eigenschaften des finalen Mehrschichtenmaterials für einen konkreten Anwendungsfall. Es sei nunmehr angemerkt, dass derartige Folien zur Zeit durch ein industrielles Verfahren hergestellbar sind, so dass ihre Zugänglichkeit gewährt und die Fertigungstechnik eines finalen elektrischen Isolierstoffes im Vergleich zum bekannten Stand der Technik im wesentlichen vereinfacht wird.

Danach wird eine Folie mehrfach zusammengefaltet. Wenn beispielsweise eine kleine elektronische Platte z. B. für eine Dünnfolien-Mikroschaltung hergestellt werden soll, werden aus einem Stapel in Form eines Buches Werkstücke mit Abmessungen und einer Konfiguration einer künftigen elektronischen Platte ausgestanzt. Das Werkstück für eine Platte wird auf die Sitzstelle aufgesetzt. Wenn nunmehr eine Abschirmung erforderlich ist, wird dann auf die untere Schicht des Stapels eine abschirmende metallische Lage beispielsweise durch eine Vakuumbedampfung oder ein galvanisches Verfahren aufgebracht. Auf die obere Schicht des Stapels (im Falle einer einseitigen Verdrahtung) werden durch die Bedampfung oder die Galvanik Strompfade aufgetragen, an welche Funkbestandteile angelötet werden. Bei einer üblichen Verdrahtung wird der Stapel mit durchgehenden Öffnungen versehen, in welche Anschlüsse der Funkbestandteile eingeführt werden. Dabei werden auf der oberen Folie (Platte) geringe stromleitende Ringe (Halbringe) hergestellt. Nach der Einführung eines Funkbestandteiles, z. B. des Anschlusses eines Widerstandes, eines Kondensators od. dgl., wird der Anschluss des Elementes auf der Verdrahtungseite (dem Unterteil des Stapels) angelötet. Ein Lotteil, der in den Ring (bzw. Halbring) von der Oberseite des Stapels her (der Seite, auf der ein Funkbestandteil eingesetzt wird) eingedrungen ist, bleibt dort auch nach Erhärten und befestigt somit die Folien (Platten) miteinander ohne Leim. Die Verdrahtung erweist sich als zuverlässig und die Durchschlagsspannung als ultrahoch, so dass sich die Platte bei hohen Spannungen in der Hochspannungstechnik einsetzen lässt. Gesetzt den Fall, dass die Strompfade auf die beiden Plattenseiten (eine doppelseitige Verdrahtung) aufgebracht werden sollen, entfallen dann die Ringe, indem die Verdrahtung auf einmal auf der oberen und unteren Folie des Stapels vorgenommen wird.

Eine mehrschichtige Platte oder andere Mehrelementenkonstruktionen weisen neben einer ultrahohen dielektischen Festigkeit auch eine ultrahohe mechanische Festigkeit und einen extrem niedrigen dielektrischen Verlustfaktor auf, so dass sie unter Bedingungen von hohen Belastungen und in Höchstfrequenzbereichen einsetzbar sind.

In ähnlicher Weise lassen sich auch elastische gedruckte (Band-)Anschlusskabel und elastische Induktivitätsspulen herstellen.

Wenn eine extrem feste dielektrische Zwischenlage für einen Kondensator benötigt wird, wird aus einem Stapel in Form eines Buches mit Blick auf die Sitzkonfiguration ein Werkstück ausgestanzt und zwischen den Kondensatorbelägen eingelegt. Der Kondensator ist somit fertiggestellt.

Um ein einfachstes, extrem festes elektrisches Kabel zu fertigen, wird ebenfalls ein Stapel aus Schichten eines Folienmaterials in einer Menge N > 1 ausgebildet, dagegen wird in diesem Fall der Stapel als mehrschichtiges, auf eine trommelförmige Spule aufgewickeltes Band ausgestaltet. Von der trommelförmigen Spule her wird dann das mehrschichtige Band auf eine stromleitende Ader z. B. aus einem Kupferdraht aufgewickelt. Im Anschluss daran wird der mehrschichtige Stapel, je nach dessen Bestimmungszweck, mit einer zusätzlichen Schutzhülle aus einem Polymer oder einem Metall, wie z. B. Polyethylen oder Blei, von oben versehen. Unter industriellen Bedingungen werden Kabel in Ziehbänken hergestellt. Mehrschichtige elektrische Isolierstoffe lassen sich gut in den bestehenden technologischen Prozess einfügen. Insgesamt kann festgestellt werden, dass irgendwelche weitere, prinzipiell neue Anlagen für den Einsatz eines mehrschichtigen elektrischen Isolierstoffes gemäss der Erfindung nicht erforferlich sind.

Hinzu kommt, dass der Einsatz mehrschichtiger elektrischer Isolierstoffe gemäss der Erfindung eine wesentliche Herabsetzung der Materialintensität zur Folge hat, so dass insbesondere für einen mehrschichtigen Isolator bei ein und derselben Durchschlagsspannung gemäss der technischen Forderung der Isolierstoff mehrfach weniger verbraucht wird, wodurch naturgemäss die Kosten des Kabels selbst gesenkt werden.

Abschliessend sei nunmehr betont, dass die vorstehend angeführten Ausführungsbeispiele nur noch für ein besseres Verständnis des Erfindungskernes und der Vorteile der Erfindung gedacht sind und keinesfalls sämtliche Ausgestaltungen der letzteren umfassen. Für den Fachmann auf diesem Gebiet der Technik ist es klar, dass sich auch weitere konkrete Ausführungsformen anbieten, die nicht über den Rahmen der Patentansprüche hinausgehen.

**Tabelle 1**

| Summarische Dicke einer Mehrelementenstruktur (eines Stapels), D_{N} | Anzahl der Folienelemente, die in einer Mehrelementenstruktur (einem Stapel) enthalten sind, N | Mittelwert einer Bruchspannung, MPa |
|---|---|---|
| 145µm | 1 | 100 |
| 290 µm | 2 | 100 |
| 580 µm | 4 | 100 |
| 1160 µm | 8 | 100 |
| 18 µm | 1 | 430 |
| 36 µm | 2 | 450 |
| 72 µm | 4 | 500 |
| 144 µm | 8 | 700 |

**Tabelle 2**

| Summarische Dicke einer Mehrelementstruktur (eines Stapels), D_{N} | Anzahl der Folienelemente, die in einer Mehrelementstruktur (einem Stapel) enthalten sind, N | Mittelwert der elektrischen Durchschlagsspannung *E̅*, kV/µm |
|---|---|---|
| 3 µm | 1 | 1,4 |
| 6 µm | 2 | 1,9 |
| 9 µm | 3 | 2,8 |
| 33 µm | 11 | 4,5 |
| 10 µm | 1 | 0,91 |
| 20 µm | 2 | 1,15 |
| 30 µm | 3 | 1,23 |
| 60 µm | 6 | 1,4 |
| 80 µm | 8 | 1,6 |
| 20 µm | 1 | 0,5 |
| 40 µm | 2 | 0,6 |
| 80 µm | 1 | 0,26 |
| 160 µm | 2 | 0,26 |

### Gewerbliche Anwendbarkeit

Dieser elektrische Isolierstoff lässt sich wirksam als Isolator für elektrische Leiter einsetzen, die in verschiedenen Industriezweigen, insbesondere in der funktechnischen Industrie, Kabelindustrie, der Mikroelektronik usw. Anwendung finden.

## Patentansprüche

1. Elektrischer Isolierstoff mit einer Mehrschichtenstruktur, bestehend aus Dünnfolienschichten in einer Menge von N, wobei N > 1 ist, **dadurch gekennzeichnet, dass** alle Schichten aus gleichtypigen, zu einem Stapel zusammengefassten Einzelfolien mit im wesentlichen gleicher Dicke d < 80 µm ausgebildet sind.
